# EUROPÄISCHE PATENTSCHRIFT

(11) **EP 2 951 448 B1**
(45) Veröffentlichungstag und Bekanntmachung des Hinweises auf die Patenterteilung: **29.06.2016**
(21) Anmeldenummer: 14709411.4
(22) Anmeldetag: 28.01.2014
(51) Int. Cl.: F16B 5/02, F16B 19/10, F16B 1/00, F16B 13/06

(54) **FERNBETÄTIGBARES BEFESTIGUNGSMITTEL**
REMOTELY CONTROLLABLE FASTENING MEANS
MOYEN DE FIXATION ACTIONNABLE À DISTANCE

(30) Priorität: 29.01.2013 DE 202013100400 U
(43) Veröffentlichungstag der Anmeldung: 09.12.2015
(73) Patentinhaber: Tchouangueu, Jacques, 8037 Zürich (CH)
(72) Erfinder: Tchouangueu, Jacques, 8037 Zürich (CH)
(74) Vertreter: Tahhan, Nader Isam Mark
(86) Internationale Anmeldenummer: PCT/IB2014/058612
(87) Internationale Veröffentlichungsnummer: WO 2014/118702

(56) Entgegenhaltungen:
- DE-A1- 4 214 206
- US-A1- 2006 133 912

## Beschreibung

### Einleitung

Die Erfindung betrifft das Gebiet der Verbindungstechnik. Genauer betrifft die Erfindung das Gebiet von lösbaren schraubenartigen Verbindungsmitteln.

### Stand der Technik und Nachteile

Verbindungsmittel zum lösbaren Verbinden von Gegenständen sind seit langer Zeit in Form von Schraubverbindungen bekannt. Hierbei wird ein vorliegend "Befestigungsmittel" genannter erster bewegbarer (separat vorliegender) Körper mit einem dazu passenden, vorliegend "Befestigungsgrund" genannten zweiten Körper durch drehende Relativbewegung verbunden. Der zweite Körper kann ebenfalls bewegbar (mobil) oder auch (im Wesentlichen) unbewegbar (immobil) sein.

Das Befestigungsmittel kann ein Außengewinde tragen (Schraube). Der Befestigungsgrund trägt dann ein dazu passendes Innengewinde. Er kann ebenfalls bewegbar sein (Mutter) und dient somit ausschließlich der Befestigung. Er kann aber auch in einem weiteren Gegenstand angeordnet oder Teil desselben sein (Gewindebohrung), wobei der weitere Gegenstand im Wesentlichen andere Funktionen erfüllt (z.B. Karosserie, Wand).

Das Befestigungsmittel kann ein Innengewinde tragen (Mutter). Der Befestigungsgrund trägt dann ein dazu passendes Außengewinde. Er kann ebenfalls bewegbar sein (Schraube) und dient somit ausschließlich der Befestigung. Er kann aber auch an einem weiteren Gegenstand angeordnet sein oder Teil desselben sein (Gewindebolzen, Gewindestift), wobei der weitere Gegenstand im Wesentlichen andere Funktionen erfüllt (z.B. Motorblock).

Ein Nachteil der bekannten Befestigungsmittel liegt darin begründet, dass sie, je nach Gewindelänge und Gewindesteigung, eine große Anzahl von Drehungen benötigen, um schließlich ihre Endposition (befestigter Zustand) zu erreichen, oder aus ihrem Gegenstück vollständig herausgedreht zu werden. Hierzu ist entsprechend viel Zeit nötig. Sind die räumlichen Verhältnisse zudem beengt, verlängert sich diese Zeit zusätzlich, da ein Benutzer das entsprechende Werkzeug (Schraubenzieher, Schraubenschlüssel) nur in kleinen Winkeln drehen kann und es immer wieder neu ansetzen muss.

Hierzu sind aus dem Stand der Technik Ratschen und dergleichen bekannt, welche ein schnelleres Befestigen und Lösen oder zumindest eine Vermeidung des wiederholten Ansetzens erlauben. Auch angetriebene Werkzeuge sind bekannt. Alle diese Lösungen bedürfen jedoch eines zumindest einmaligen Ansetzens des Werkzeugs an die Schraube oder Mutter, um dieselbe in ihrem Befestigungsgrund zu verankern oder aus ihm zu lösen. Sind mehrere Befestigungsmittel aus ihren Befestigungsgründen zu lösen, vervielfacht sich die dazu notwendige Zeit entsprechend.

Ein verbessertes Befestigungsmittel ist z.B. aus der Druckschrift US 2002/0071738 A1 bekannt. Dieses wird mittels mechanischen Vorsprüngen, die in den Befestigungsmittelkörper einziehbar sind, in einem Befestigungsgrund gehalten. Zum Entfernen des Befestigungsmittels ist ein spezielles mechanisches Werkzeug nötig; durch Ansetzen desselben am Befestigungsmittel werden die Vorsprünge ins Innere desselben hineingezogen bzw. lassen sich hineindrücken, so dass es aus dem Befestigungsgrund entfernbar ist.

Ein weiterer Nachteil besteht in der Vielzahl unterschiedlicher Eingriffsgeometrien (Mitnahmeprofile). Bekannte Geometrien sind z.B. der Schlitz- oder Kreuzschlitz, Innen- oder Außensechskant, oder sog. "Torx" (Innensechsrund, nach EN ISO 10664). Da häufig Verbindungsmittel mit unterschiedlichen Eingriffsgeometrien an einem Bauteil zur Anwendung kommen, müssen eine entsprechende Anzahl unterschiedlicher Werkzeuge vorgehalten werden; andernfalls lassen sich die Bauteile nicht montieren oder demontieren. Auch das vorstehend genannte Befestigungsmittel benötigt ein spezielles, dafür vorgesehenes Werkzeug.

Ein häufiges Problem ist die Beschädigung der Eingriffsgeometrien beim Ein-, spätestens jedoch beim Herausdrehen des Befestigungsmittels aus dem Befestigungsgrund, verursacht durch zu hohe Eindrehkräfte. Die Verwendung von Drehmomentschlüsseln, wie sie seit langer Zeit bekannt sind (z.B. Druckschrift US 2159354 aus dem Jahre 1939), hat sich nicht in allen Bereichen der Technik durchgesetzt, da ein solcher Schlüssel wiederum ein spezielles Werkzeug ist.

Kein Werkzeug wird beispielsweise zum Lösen des in der Druckschrift DE 103 13 170 B3 gezeigten Befestigungsmittels benötigt; hier erfolgt das Lösen des Steckbolzens durch Betätigen eines einfachen Druckknopfes.

Ebenfalls kein Werkzeug, sondern elektrischer Strom wird benötigt, um die in den Druckschriften DE 10 2004 004 658 A und US 2005/0172462 A1 gezeigten Befestigungsmittel aus einem Befestigungsgrund zu lösen. Durch den Strom werden Komponenten aus Formgedächtnislegierungen oder Bimetall erwärmt, wodurch sie sich derart verformen, dass das Lösen ermöglich wird.

Eine andere Möglichkeit des Lösens von Befestigungsmitteln wird in der Druckschrift DE 19507065 A1 vorgeschlagen. Bei normalen Umgebungsbedingungen stabile mechanische Komponenten werden mittels eines Fluids (z.B. Wasser oder Wasserdampf) aufgelöst, so dass dann ein vorgespannter Federmechanismus die eigentliche Auslöseenergie bereitstellt, die zu einem Einziehen formschlüssig im Befestigungsgrund verankerter Elemente führt. Auch ein (reversibles) Bewegen der Elemente mittels mechanischer Kopplung mit aufquellbaren Komponenten wird vorgeschlagen.

Die vorstehend genannten elektrisch betätigbaren Befestigungsmittel können nur geringe Kräfte aufbringen, so dass sie nur in solchen Situationen anwendbar sind, in denen die zum Lösen benötigten Kräfte gering sind. Die chemisch auslösbaren Befestigungsmittel haben den Nachteil, entweder lediglich einmal betätigbar zu sein, oder zumindest sehr lange Schaltzeiten aufzuweisen.

Ein weiterer Nachteil ist in der bekannten Tatsache begründet, dass montierte Verbindungsmittel nach einer gewissen Zeit nur noch schwer oder überhaupt nicht mehr zu lösen sind. Dies kann beispielsweise durch schleichende Korrosion verursacht werden. Dieser Problematik wird, bei mäßigem Erfolg, mittels entsprechender Beschichtungen zu begegnen versucht.

Ein anderes Problem ergibt sich insbesondere bei der Verwendung von Gruppen aus Befestigungsmitteln, welche gemeinsam der Verbindung zweier oder mehrerer Bauteile dienen (z.B. Kotflügel am Fahrzeug, Verkleidungspaneel an einer Wand). Die zum Befestigen bzw. Lösen der Bauteile benötigte Zeit wächst linear mit der Anzahl der Befestigungsmittel an, was bei großen Anzahlen zu sehr langen Zeiten führt. Bekannte Lösungen mit elastischen Verankerungen (z.B. Kunststoffclips) sparen zwar Zeit bei der Befestigung, sind jedoch umso schwerer und nicht mehr zeitlich parallel lösbar. Eine Möglichkeit der Verringerung der zum Lösen benötigten Zeit besteht in der Verwendung von elektrisch oder fluidisch betätigbaren Befestigungsmitteln (s.o.), wobei weiterhin die Einschränkung derselben auf Fälle mit geringen Lösungskräften bzw. langsamen Schaltzeiten besteht.

Eine ebenfalls auf einem fluidbetätigbaren Antrieb basierende Lösung ist in der Druckschrift DE 4214206 A1 gezeigt. Hier wird ein gegen Tellerfedern arbeitender Arbeitszylinder mittels eines Fluids (z.B. Hydrauliköl) bewegt, an welchem in axialer Richtung ein Kugelgelenkbolzen angebracht ist. Dieser drückt in einer Ruheposition mit einer von den Tellerfedern vorgegebenen Kraft auf eine zu befestigende Schiene. Zum Auslösen wird der Arbeitszylinder mit Druck beaufschlagt, so dass der Bolzen von der Schiene abhebt und diese freigibt. Nachteilig an dieser Lösung ist die starr durch die Tellerfedern vorgegebene Klemmkraft, sowie die Notwendigkeit, mittels des Arbeitszylinders einen Druck aufbauen zu können, der den Haltedruck der Tellerfedern übersteigen muss.

### Aufgabe der Erfindung und Lösung

Der Erfindung liegt die Aufgabe zugrunde, ein Befestigungsmittel bereitzustellen, welches ein sehr schnelles Lösen des Befestigungsmittels aus dem Befestigungsgrund erlaubt. Spezielle Werkzeuge sollen hierfür nicht benötigt werden. Die zum Lösen einer Mehrzahl von Befestigungsmitteln benötigte Zeit soll im Vergleich zu herkömmlichen Lösungen kurz sein. Das Befestigungsmittel soll auch dann leicht lösbar sein, wenn die Verbindungskräfte (Haftreibekräfte zwischen Befestigungsmittel und Befestigungsgrund) sehr hoch sind. Zudem sollen auch Gruppen von Befestigungsmitteln in sehr kurzer Zeit verbind- und/oder lösbar sein.

Die Aufgabe wird durch ein Befestigungsmittel nach Anspruch 1 sowie ein Befestigungsmittel nach Anspruch 5 gelöst. Weitere, vorteilhafte Ausführungsformen sind den Unteransprüchen, der nachfolgenden Beschreibung sowie den Figuren zu entnehmen.

### Beschreibung

Die Erfindung umfasst zwei Haupt-Typen von Befestigungsmitteln. Zunächst werden die Merkmale beschrieben, welche beiden Typen gemeinsam sind.

Das erfindungsgemäße fernsteuerbare Befestigungsmittel zum lösbaren Verbinden von Bauteilen weist eine Längsachse und mindestens einen Befestigungskörper zur Einführung in einen Befestigungsgrund auf. Der Befestigungsgrund ist dabei wie weiter oben dargelegt dazu vorgesehen, mit dem Befestigungsmittel lösbar verbunden zu werden, indem dieses zumindest teilweise im Befestigungsgrund aufgenommen wird.

Hierzu weist der Befestigungskörper einen Anker auf, welcher in den Befestigungsgrund einführbar ist, wobei der Anker zur formschlüssigen und/oder reibschlüssigen Verankerung des Befestigungsmittels im Befestigungsgrund vorgesehen ist. Hierzu ist er in mindestens eine erste Richtung bewegbar. Zum Lösen des Befestigungsmittels aus dem Befestigungsgrund ist der Anker (jeweils, wenn es mehrere erste Richtungen gibt) in eine dieser ersten Richtung entgegengesetzte zweite Richtung bewegbar.

Ferner ist der Anker mit einem fernbetätigbaren und zum Betrieb mit einem Fluid vorgesehenen Antrieb verbunden oder zumindest verbindbar, und von diesem in zumindest die zweite Richtung bewegbar. Der Antrieb hat die Aufgabe, den Anker zumindest in die zweite Richtung (Richtung zum Lösen) zu bewegen, in welcher der Anker eine Lage einnimmt, die es erlaubt, ihn - und somit das Befestigungsmittel - aus dem Befestigungsgrund zu lösen. Optional kann der Antrieb den Anker auch in die der Befestigung dienende erste Richtung bewegen.

Erfindungsgemäß ist der Antrieb ein fluidantreibbarer (auch: fluidgetriebener) Antrieb. Das bedeutet, dass der Antrieb zum Betrieb mit einem Fluid, also einer Flüssigkeit, einem Gas, oder einer Mischung daraus vorgesehen ist. Auch Festkörper, z.B. kleine Gummikügelchen, können dem Fluid zur Erhöhung des Impulses beigemischt sein. Die Fernsteuerbarkeit wird durch Ein- bzw. Abschalten einer entfernt angeordneten Druckquelle bewirkt.

Außerdem ist der Antrieb innenliegend, also im Befestigungsmittel, angeordnet. Dies hat den Vorteil, dass das Befestigungsmittel eine herkömmliche Schraube oder andere Befestigungsmittel ersetzen kann, ohne dass tiefergehende konstruktive Anpassungen an dem zu verbindenden Bauteil gemacht werden müssen.

Außerdem ist der Antrieb dazu geeignet, den Anker zumindest in die zweite Richtung zu bewegen.

Nachfolgend werden die Merkmale beschrieben, welchen den ersten Haupt-Typ charakterisieren.

Demnach umfasst der Anker mindestens zwei Einzelteile, und die jeweils erste Richtung, in die jedes dieser Einzelteile bewegbar ist, erstreckt sich radial von der Längsachse weg.

Schließlich weist jedes dieser Einzelteile einen senkrecht zur Längsachse verlaufenden Vorsprung auf, welcher mit einer Hinterschneidung des Befestigungsgrundes formschlüssig zusammenwirken kann.

Der zweite Haupt-Typ hat mit dem ersten Haupt-Typ die Merkmale "Befestigungskörper", "Befestigungsgrund", "Anker", "Bewegbarkeit des Ankers in mindestens eine erste Richtung", "Lösen durch Bewegen in die zweite Richtung", "Bewegen mittels eines innenliegenden, fernbetätigbaren und zum Betrieb mit einem Fluid vorgesehenen Antrieb mindestens in die zweite Richtung" gemein. Zur Vermeidung von Wiederholungen wird auf die Ausführungen weiter oben verwiesen.

Jedoch ist die erste Richtung eine Rotation um die Längsachse, und der Anker ist ein Zylinder mit einem Außengewinde, welches formschlüssig mit einem Innengewinde im Befestigungsgrund zusammenwirken kann. Mit anderen Worten, während der erste Haupt-Typ einen linear wirkenden Antrieb aufweist, hat der zweite Haupt-Typ einen rotierend wirkenden Antrieb, woraus sich konstruktive Unterschiede ergeben. Insbesondere die Merkmale des innenliegenden Fluidantriebs sind beiden Haupt-Typen gemein.

Durch die Verwendung eines dem Befestigungsmittel zugeordneten fluidischen Antriebs kann das Lösen und ggf. Befestigen des Befestigungsmittels sehr schnell erfolgen. Besondere Werkzeuge sind nicht nötig, da das Betätigen mittels Beaufschlagen des Antriebs mit Druck (typischerweise Überdruck) geschieht. Da im Fall mehrerer Befestigungsmittel diese gemeinsam mit Druck beaufschlagt werden können, werden diese auch alle gemeinsam betätigt, so dass auch eine große Anzahl von erfindungsgemäßen Befestigungsmitteln in kurzer Zeit betätigbar ist. Da über den Druck auch hohe Kräfte auf den Antrieb und somit auf den Anker aufbringbar sind, ist das Befestigungsmittel auch dann leicht lösbar, wenn die Verbindungskräfte sehr hoch sind.

Nachfolgend werden vorteilhafte Ausführungsformen anhand von Beispielen und unter Zuhilfenahme der nachfolgend überblicksweise genannten Figuren erläutert.
- **Figur 1**: zeigt eine Ausführungsform des ersten Haupt-Typs des erfindungsgemäßen Befestigungsmittels in einer ersten Position als Schnittansicht.
- **Figur 2**: zeigt die Ausführungsform nach Fig. 1 in einer zweiten Position.
- **Figur 3**: zeigt die Ausführungsform des ersten Haupt-Typs des erfindungsgemäßen Befestigungsmittels in einer perspektivischen Drahtmodell-Ansicht.
- **Figur 4**: zeigt Details der Ausführungsform nach Fig. 3
- **Figur 5**: zeigt eine Schnitt-Seitenansicht auf eine Variante der Ausführungsform nach Fig. 1 mit zwei Ankerenden in einer ersten Position.
- **Figur 6**: zeigt die Ausführungsform nach Fig. 5 in einer zweiten Position.
- **Figur 7**: zeigt eine Ausführungsform des zweiten Haupt-Typs des erfindungsgemäßen Befestigungsmittels in einer ersten Position als Schnittansicht.
- **Figur 8**: zeigt die Ausführungsform nach Fig. 7 in einer zweiten Position.
- **Figur 9**: zeigt eine Draufsicht auf die Ausführungsform nach Fig. 7 und Fig. 8.
- **Figur 10**: zeigt eine perspektivische Ansicht auf Komponenten der Ausführungsform nach Fig. 7 bis Fig. 9.
- **Figur 11**: zeigt zwei Seitenansichten unterschiedlicher Positionen einer Variante der Ausführungsform nach Fig. 7 mit zwei Ankerenden.
- **Figur 12**: zeigt eine andere Ausführungsform des zweiten Haupt-Typs des erfindungsgemäßen Befestigungsmittels in einer ersten Position als Schnittansicht.
- **Figur 13**: zeigt die Ausführungsform nach Fig. 12 in einer zweiten Position.
- **Figur 14**: zeigt eine andere Ausführungsform des ersten Haupt-Typs des erfindungsgemäßen Befestigungsmittels in einer ersten Position als Schnittansicht.
- **Figur 15**: zeigt die Ausführungsform nach Fig. 14 in einer zweiten Position.
- **Figur 16**: zeigt einen Reibungsverminderer in Form einer Rolle.
- **Figur 17**: zeigt einen Reibungsverminderer in Form einer Kugel.
- **Figur 18**: zeigt einen Reibungsverminderer in Form mehrerer Räder.
- **Figur 19**: zeigt schematisch die fluidische Zusammenschaltung von mehreren Antrieben.
- **Figur 20**: zeigt ein Beispiel für die gruppenweise fluidische Zusammenschaltung von mehreren Antrieben.

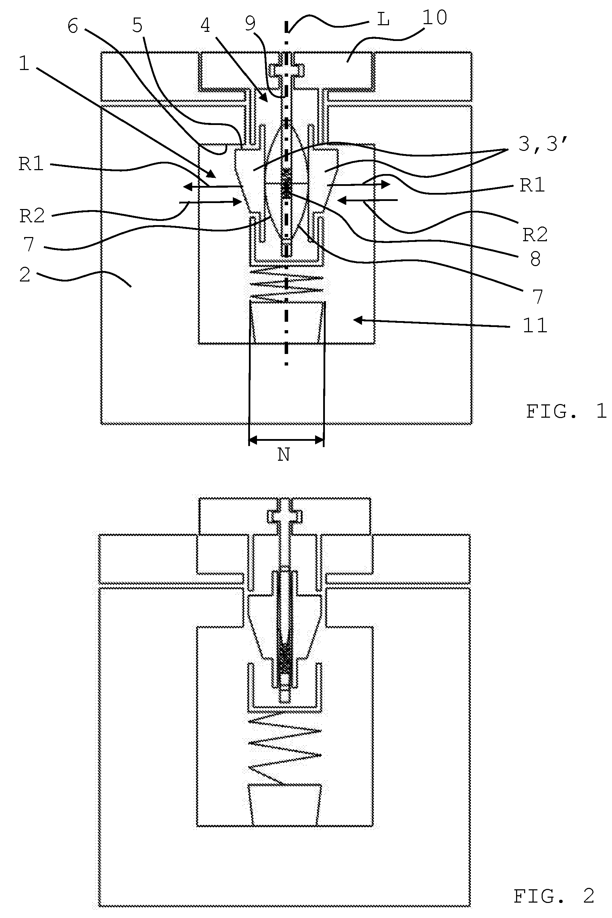

Die **Fig. 1** zeigt eine Ausführungsform des ersten Haupt-Typs des erfindungsgemäßen Befestigungsmittels. Die Längsachse L durchzieht es in vertikaler Richtung; sie ist gleichzeitig die Einschubrichtung. Der Befestigungskörper 1 ist in einen Befestigungsgrund 2 eingeführt, der ein Bauteil sein kann. Der Befestigungskörper 1 weist einen Anker 3 auf, der mehrteilig ist (Einzelteile 3'). Insbesondere der Anker 3 ist in den Befestigungsgrund 2 einführbar ausgestaltet.

Der Anker 3 ist zur formschlüssigen und/oder reibschlüssigen Verankerung des Befestigungsmittels im Befestigungsgrund 2 geeignet. Hierzu ist er in mindestens eine erste Richtung R1 bewegbar; vorliegend sind dies zwei erste Richtungen R1, da beide Einzelteile 3' radial nach außen bewegbar sind. Zum Lösen des Ankers 3 sind die Einzelteile 3' jeweils in eine dieser ersten Richtung R1 entgegengesetzte zweite Richtung R2 bewegbar.

Hierfür ist der Anker 3 mit einem fernbedienbaren Antrieb 4 verbunden und von diesem in zumindest die zweite Richtung R2 bewegbar.

Nach einer nicht gezeigten Ausführungsform ist der Antrieb durch eine elektrische Komponente ergänzt (z.B. elektrisch arbeitende Fluidpumpe, mittels Bimetall oder Formgedächtnislegierung antreibbarer Fluidzylinder). Die Fernbetätigbarkeit wird somit auf einfache Weise durch das Ein- und Ausschalten eines elektrischen Stromes bewirkt. Bevorzugt sind hierfür insbesondere motorische (rotierende) Antriebe. Wenngleich elektrischer Strom grundsätzlich leicht verfügbar ist, kann es jedoch bei längeren Stillstandszeiten des erfindungsgemäßen Befestigungsmittels zu Problemen mit einem rein elektrischen Antrieb kommen (Korrosion). Zudem sind die durch miniaturisierte elektrische Antriebe erzeugbaren Kräfte - insbesondere ohne zusätzliches Getriebe - unter Umständen nicht ausreichend, um festsitzende Befestigungsmittel zu lösen.

Nach der in **Fig. 1** gezeigten Ausführungsform ist der Antrieb 4 im Befestigungsmittel angeordnet. Das bedeutet, dass das Befestigungsmittel den Antrieb 4 als integrierte, innenliegende Komponente umfasst, und dass der Antrieb 4 mit dem Befestigungsmittel, insbesondere mit dem Befestigungskörper 1, fest verbunden ist.

Ebenfalls nach der in der **Fig. 1** gezeigten Ausführungsform umfasst der Anker 3 mindestens zwei Einzelteile 3', und die jeweils erste Richtung R1, in die jedes dieser Einzelteile 3' bewegbar ist, erstreckt sich radial von der Längsachse L weg. Mit anderen Worten, der mehrteilige Anker 3 kann den Umfang des Befestigungsmittels in einem Längsabschnitt desselben temporär vergrößern.

Nach dieser Ausführungsform weist dazu jedes dieser Einzelteile 3' einen senkrecht zur Längsachse L verlaufenden Vorsprung 5, der (nach einer nicht gezeigten Ausführungsform) auch ein Bolzen sein kann, auf, welcher mit einer Hinterschneidung 6 des Befestigungsgrundes 2, die (nach einer nicht gezeigten Ausführungsform) auch eine Bohrung sein kann, formschlüssig zusammenwirken kann. Mit anderen Worten, der Anker 3 weist geometrische Merkmale auf, welche in einer ersten Position (Ruheposition, in **Fig. 1** gezeigt) formschlüssig und/oder reibschlüssig mit dem Befestigungsgrund 2 zusammenwirken, und in einer zweiten Position (Löseposition, in **Fig. 2** gezeigt) dieses Zusammenwirken nicht aufweisen, sodass das Befestigungsmittel nicht mehr im Befestigungsgrund 2 verankert ist.

In der **Fig. 2** wurden die Bezugszeichen aus Gründen der Übersichtlichkeit weggelassen. Wie erkennbar, sind die Einzelteile 3' soweit in Richtung der Längsachse L zurückgezogen, dass der Befestigungskörper 1 aus dem Befestigungsgrund 2 herausfahren kann. Das im Bild oben liegende Bauteil (ohne Bezugszeichen) kann nun von dem unten liegenden, den Befestigungsgrund 2 aufweisenden Bauteil abgenommen werden.

Vorteilhafterweise sind die Einzelteile 3' des Ankers 3 an ihren Außenseiten so beschaffen, dass sie eine Schräge aufweisen, welche derart geneigt ist, dass das in Richtung der Spitze 11 des Befestigungsmittels weisende Ende eines Einzelteils 3' in beiden Positionen einen "Nenndurchmesser" N des Befestigungsmittels nicht überragt, wohingegen das andere Ende des Einzelteils 3' diesen Nenndurchmesser N nur in der zweiten Position nicht überragt. Somit kann diese Schräge als Einführhilfe fungieren, und beim Einführen des Befestigungsmittels werden die Einzelteile 3' des Ankers 3 selbsttätig in Richtung der Längsachse (zweite Richtung) gedrückt, ohne dass hierzu zwingend ein Antrieb nötig ist.

Es ist im vorstehend beschriebenen Fall außerdem bevorzugt, dass sich der fluidantreibbare Antrieb 4 in einem Bereich zwischen den der Längsachse L zugewandten Innenseiten der Einzelteile 3' des Ankers 3 befindet, und gebildet ist durch auf diese Innenseiten wirkende, die Einzelteile 3' radial nach außen (von der Längsachse L weg) drückende Federn 7, die mechanisch, beispielsweise über Seilzüge, Ketten oder Zahnräder, mit einem Zylinder 8 gekoppelt sind. Somit ist der Antrieb vollständig im Inneren des Befestigungsmittels aufgenommen.

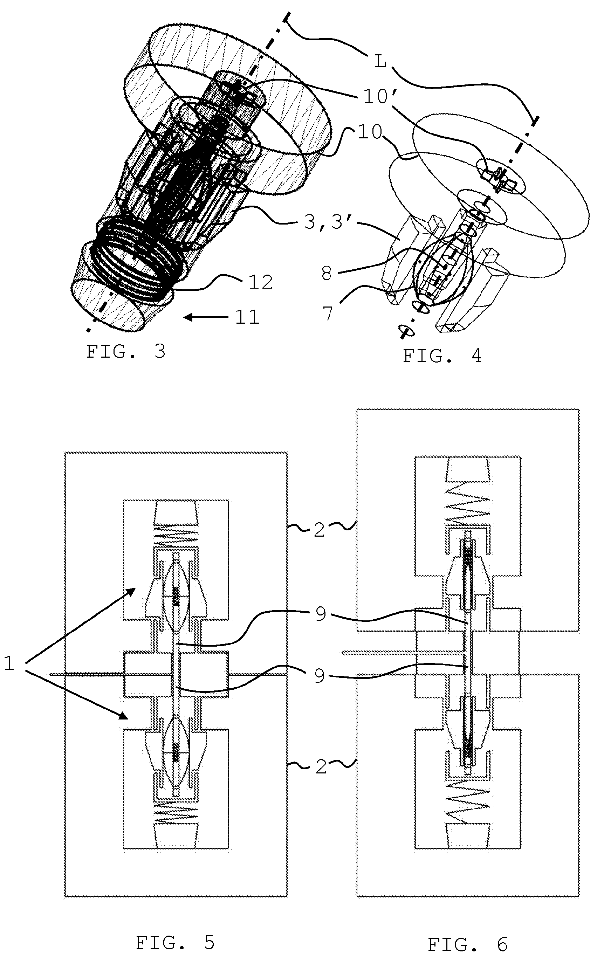

Hierzu wird auf die **Fig. 3** und **Fig. 4** verwiesen, in denen diese Details besser erkennbar sind. Aus Gründen der Übersichtlichkeit wurden die Bezugszeichen dort, wenn überhaupt, dann nur einmal vergeben.

Der Zylinder 8 seinerseits ist bewegbar in einem längsaxial verlaufenden, von außen mit einem Fluid beaufschlagbaren Druckkanal 9 angeordnet, so dass der Zylinder 8 bei einer Druckbeaufschlagung aus einer Ruheposition in eine Löseposition auslenkbar ist, in welcher die mit ihm gekoppelten Federn 7 in die jeweils zweite Richtung R2 bewegt sind. Wird also der Zylinder 8 mit Druck beaufschlagt, bewegt er sich im Druckkanal 9, und nimmt über eine Mechanik die Federn 7 mit, so dass diese die Einzelteile 3' des Ankers 3 entlasten, und der Anker 3 aus der Ruhe- in die Löseposition fährt. Hierfür ist es vorteilhaft, wenn die Innenseiten des Ankers 3 mit den Federn 7 verbunden sind, um mitgenommen werden zu können, oder wenn (nach einer nicht gezeigten Ausführungsform) die Schwerkraft oder eine andere Rückstellkraft vorhanden ist, mit welcher der Anker 3, ohne von den Federn 7 belastet zu sein, in die Löseposition fährt.

Für den nicht dargestellten Fall eines elektrisch unterstützten Antriebs ist es bevorzugt, dass die Federn 7 als Bimetall ausgeführt sind, so dass sie selber den Antrieb bilden und sich bei Stromdurchfluss verformen, wobei sie den Anker 3 entlasten, so dass das Befestigungsmittel lösbar ist.

Damit das erfindungsgemäße Befestigungsmittel nicht ausschließlich mittels des fluidgetriebenen Antriebs 4, sondern auch auf andere, insbesondere manuelle Weise betätigbar (insbesondere lösbar) ist, weist nach einer bevorzugten Ausführungsform das Befestigungsmittel ferner einen Kopf 10 mit einem für ein Werkzeug zugänglich angeordneten Mitnahmeprofil 10' auf, welches mechanisch mit dem Zylinder 8 oder, wie in den ersten vier Figuren dargestellt, mit dem Druckkanal 9 gekoppelt ist. Dies kann beispielsweise dadurch geschehen, dass der Zylinder 8 in der Ruheposition weit am Kopfende des Befestigungsmittels liegt, so dass er von Außen durch den Druckkanal 9 hindurch erreichbar und verschiebbar oder (beispielsweise aufgrund eines eingeprägten schlitzförmigen Mitnahmeprofils 10') verdrehbar ist. In der dargestellten Ausführungsform ist das Mitnahmeprofil 10' im Kopf 10 angeordnet, welcher in den Druckkanal 9 übergeht, so dass dieser von außen mit einem herkömmlichen Werkzeug (Kreuzschlitzschraubendreher, nicht gezeigt) drehbar ist.

Als Ergebnis werden bei Rotation und/oder axialer Verschiebung des Mitnahmeprofils 10' Zylinder 8 und Druckkanal 9 relativ zueinander rotiert und/oder axial zueinander verschoben, und die mit dem Zylinder 8 gekoppelten Federn 7 werden in die jeweils zweite Richtung R2 bewegt. Somit kann der Anker 3 in die Löseposition gelangen und das Befestigungsmittel kann gelöst werden.

Es ist klar, dass eine analoge Konstruktion auch für einen elektrisch unterstützten Antrieb denkbar ist, ohne den erfinderischen Gedanken zu verlassen.

Es ist außerdem bevorzugt, dass das Befestigungsmittel eine am vorderen Ende des Befestigungskörpers 1 angeordnete Spitze 11 mit einer Feder 12 aufweist (s. **Fig. 3****),** deren Federkraft entgegen einer Einschubrichtung des Befestigungsmittels (im Bild nach oben) weist. Sobald sich der Anker 3 in die Löseposition bewegt, treibt die Federkraft den Befestigungskörper 1 aus dem Befestigungsgrund 2 heraus, so dass zum einen eine sehr leichte optische Kontrolle möglich ist, ob ein Befestigungsmittel verbunden oder gelöst ist, und zum anderen das selbsttätige Lösen weiter unterstützt wird.

Das Eintreiben eines solchen Befestigungsmittels ersten Haupt-Typs kann beispielsweise auch mit einem Hammer erfolgen, während das Lösen mit einem kurzen Fluidimpuls zu einem sofortigen Herausspringen des Befestigungsmittels führt.

Es sei angemerkt, dass auch diese Ausführungsform mit einem elektrisch unterstützten Antrieb realisierbar ist.

Selbstverständlich ist die Erfindung auch so konstruierbar, dass sich der Anker bei Überdruck in der ersten Position befindet, und bei Ablassen dieses Überdrucks in die zweite Position fahren kann. Sofern das Befestigungsmittel ausreichend fluiddicht ist, kann auf diese Weise auf das ansonsten zum Lösen notwendige Bereitstellen eines Überdrucks, z.B. mittels eines Druckbehälters oder Kompressors, verzichtet werden. Ebenso ist es denkbar, mit Unter- anstatt mit Überdruck die Bewegung des Ankers zu steuern, ohne von der grundlegenden Idee der Erfindung abzuweichen.

In den **Fig. 5** und **Fig. 6** ist eine Variante der vorstehend beschriebenen Ausführungsform ersten Haupt-Typs gezeigt, welche zwei Ankerenden und somit Befestigungskörper 1 aufweist. Eines dieser Enden ist in einem ersten Befestigungsgrund 2, unten im Bild, verankert, das andere Ende in einem zweiten Befestigungsgrund 2, oben im Bild. Im linken Bild befindet sich das Befestigungsmittel in der Ruheposition und befestigt die beiden Befestigungsgründe 2 miteinander. Im rechten Bild ist das Befestigungsmittel in einer Löseposition dargestellt, die beiden Befestigungsgründe 2 sind voneinander beabstandet. Dies wird auch über die beiden Federn (Bezugszeichen weggelassen) unterstützt. Über eine gemeinsame Fluidleitung (ohne Bezugszeichen) werden die Druckkanäle 9 der beiden Seiten des Befestigungsmittels zeitgleich mit Fluid beaufschlagt, was zu einem ferngesteuerten Lösen des Befestigungsmittels führt.

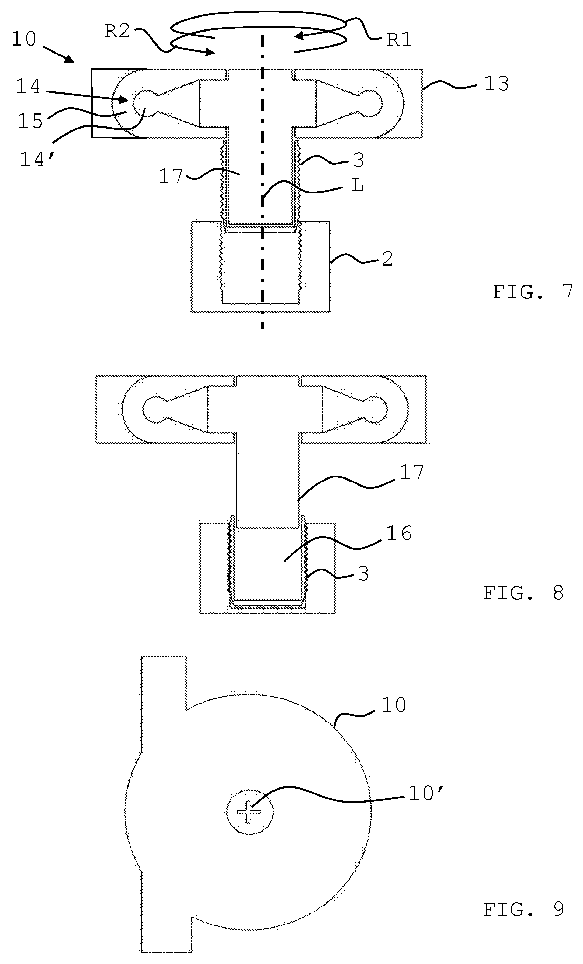

Bei einer Ausführungsform des zweiten Haupt-Typs des Befestigungsmittels mit fluidantreibbarem Antrieb, die in **Fig. 7** und **Fig. 8** gezeigt wird, ist die erste Richtung R1 eine Rotation um die Längsachse L und der Anker 3 ein Zylinder mit einem Außengewinde, welches formschlüssig mit einem Innengewinde im Befestigungsgrund 2 zusammenwirken kann. Mit anderen Worten, die erste und zweite Richtung R1, R2 verlaufen nicht mehr radial, sondern kreis- bzw. schraubenförmig, und der Anker 3 ist vergleichbar mit dem Gewindestück einer herkömmlichen Schraube oder eines Gewindebolzens ausgestaltet.

Der Antrieb 4 ist dann vorzugsweise in einem Gehäuse 13 angeordnet, welches sich jenseits des den Anker 3 umfassenden Endes des Befestigungsmittels befindet. Im Falle eines an eine herkömmliche Schraube erinnernden Befestigungsmittels ist demnach der Antrieb 3 im (Schrauben-)Kopf 10, somit nach wie vor innenliegend untergebracht.

Die **Fig. 9** zeigt eine Ansicht von oben/außen auf das Befestigungsmittel nach dieser Ausführungsform. Die im Bild vertikal verlaufende breite Linie stellt den Zu- und Abfluss (ohne Bezugszeichen) für den fluidgetriebenen Antrieb dar, der im Kopf 10 untergebracht ist (Antrieb nicht sichtbar). Erkennbar ist aber das Mitnahmeprofil 10', welches in der gezeigten Ausführungsform kreuzschlitzförmig ist. Durch Drehen desselben wird der Antrieb manuell angetrieben, so dass das Befestigungsmittel zusätzlich zum fernbetätigbaren Betrieb manuell befestigbar/lösbar ist.

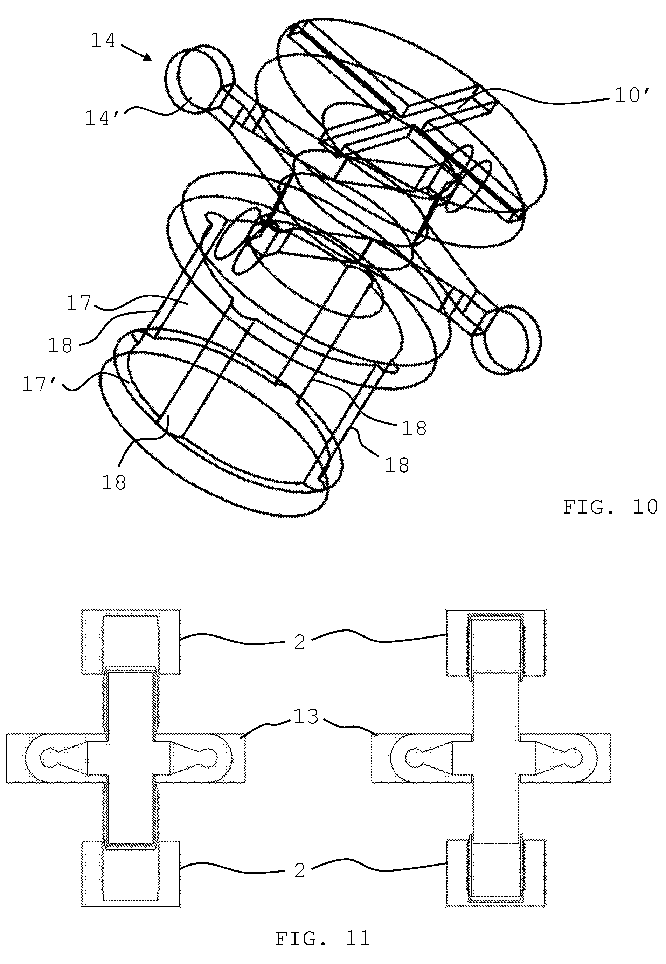

Wie aus der **Fig. 10****,** welche Details zeigt, besser hervorgeht, ist der Antrieb 4 vorzugsweise durch einen Rotor 14 gebildet, dessen Rotorblätter in einem kreisförmigen, von einem Fluid durchströmbaren Hohlraum 15 (s. Fig. 7 u. Fig. 8) angeordnet sind, wobei der Rotor 14 rotatorisch mit dem Anker 3 (oder den Ankern, s. **Fig. 11**) gekoppelt ist. Durch Rotation des Antriebs 4 rotiert der Anker 3 mit dem Außengewinde, das Außengewinde dreht sich und kann sich in den Befestigungsgrund 2 hinein- bzw. aus diesem herausdrehen. Da die Drehfrequenz des fluidisch angetriebenen Rotors 14 hoch sein kann, ist ein entsprechend schnelles Befestigen und Lösen ermöglicht.

Nach einer Variante der vorstehend genannten Ausführungsform des zweiten Haupt-Typs weist der Anker 3 einen Hohlraum 16 auf (s. **Fig. 8**) und ist axial verschiebbar auf einem in diesem Hohlraum 16 aufnehmbaren, mit dem Rotor 14 fest verbundenen Zapfen 17 mit Mitnehmern 18 angeordnet (s. **Fig. 10**). Die Mitnehmer 18 übertragen die Rotation des Rotors 14 und des Zapfens 17 auf den Anker 3.

Damit der Anker 3 nicht vom Zapfen 17 abfallen kann, und damit er axiale Kräfte übertragen kann, weist der Anker 3 vorzugsweise an seinem dem Antrieb zugewandten Ende eine Axialsicherung gegen Abfallen vom Zapfen 17 auf. Dies kann beispielsweise durch eine Durchmesserverjüngung an der Öffnung des Ankers 3 erreicht werden (nicht gezeigt), welche mit einem Absatz 17' am Ende des Zapfens 17 zusammenwirkt, den der Anker 3 dann nicht überfahren kann.

Im Falle eines zwei Ankerenden umfassenden Befestigungsmittels kann das den Antrieb 4 beherbergende Gehäuse 13 auch im Mittelteil des Befestigungsmittels angeordnet sein. Diese Variante ist in der **Fig. 11** gezeigt. Ein solches Befestigungsmittel kann vorteilhaft zwei gegenüber liegende Befestigungsgründe 2 miteinander verbinden.

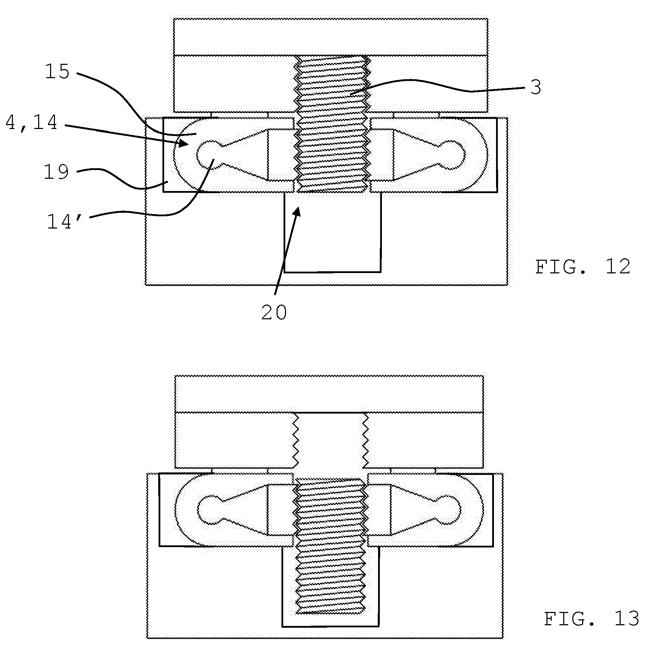

Nach einer anderen, in den **Fig. 12** und **Fig. 13** gezeigten Ausführungsform des zweiten Haupt-Typs des erfindungsgemäßen Befestigungsmittels mit rotierendem Antrieb ist der Antrieb 4 in einem Gehäuse 19 angeordnet, welches sich in einem als ein Widerlager dienenden Bauteil (jeweils unten im Bild, ohne Bezugszeichen) befindet. Der Antrieb 4 ist demnach nicht in einem "Kopf" oder dergleichen angeordnet. Er ist jedoch wiederum durch einen Rotor 14 gebildet, dessen Rotorblätter 14' in einem kreisförmigen, von einem Fluid durchströmbaren Hohlraum 15 angeordnet sind. Außerdem weist der Rotor 14 eine axiale Gewindebohrung 20 zur Aufnahme des Ankers 3 auf, wobei der Anker 3 gegen Rotation gesichert und/oder mit dem Rotor 14 rotatorisch gekoppelt ist (nicht gezeigt). Es ist klar, dass die Sicherung und Koppelung nicht gleichzeitig aktiviert sein dürfen, da sich sonst der Anker 3 nicht mehr bewegen kann.

Eine derartige Konstruktion ist mit einer selbsttätig in einem Lager rotierenden Mutter vergleichbar. Dreht sich die Mutter (der Rotor 14), und wird der in ihr steckende Gewindebolzen (Anker 3) festgehalten (Sicherung gegen Rotation), so bewegt er sich axial aus dem Rotor 14 heraus oder in ihn hinein, je nach Drehrichtung des Rotors 14. Ist der Anker 3 rotatorisch mit dem Rotor 14 gekoppelt, dreht er sich also mit, kann er sich bei Rotation in ein Gegenstück einschrauben (oben im Bild), welches typischerweise eine Gewindebohrung für den Anker 3 aufweist. Je nach Anwendungsfall kann die Sicherbarkeit oder die Koppelbarkeit relevant sein, oder es können beide beschriebene Arten sequenziell vorkommen (gegen Rotation sichern, bis der Anker 3 im Gegenstück greift, dann mit dem Rotor 14 koppeln, damit er sich in das Gegenstück einschraubt).

Das Sichern und Koppeln kann bevorzugt hydraulisch oder pneumatisch erfolgen. Es kann jedoch auch durch Anpassung der Reibwerte und Drehfrequenz erfolgen.

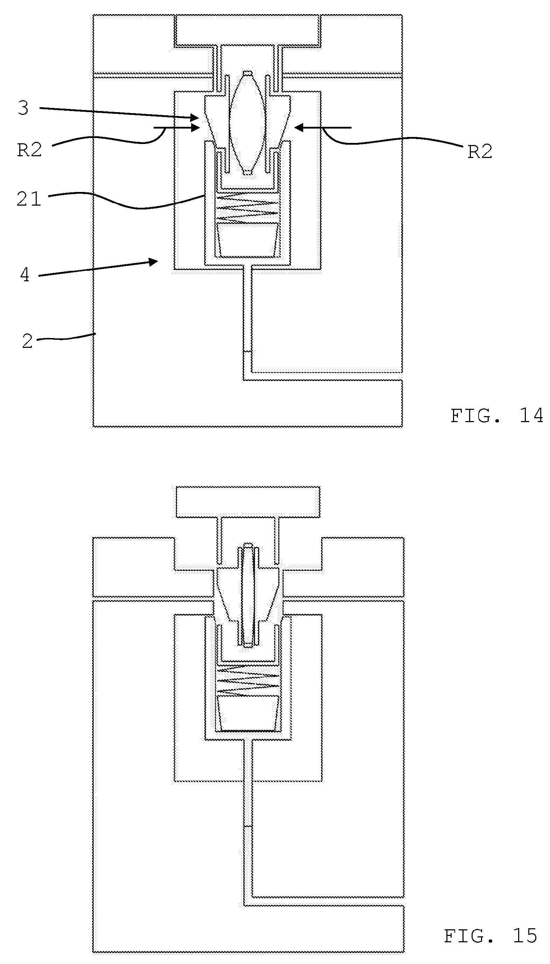

Nach einer anderen, mit dem eingangs beschriebenen ersten Haupt-Typ, und insbesondere dessen Anker, vergleichbaren Ausführungsform, dargestellt in **Fig. 14** und **Fig. 15****,** ist der fluidantreibbare Antrieb 4 außerhalb des Befestigungsmittels angeordnet und umfasst mindestens eine mechanische Komponente, welche bewegbar im Befestigungsgrund 2 angeordnet ist. Hauptunterschied ist demnach der nicht im Befestigungskörper integrierte Antrieb 4, der zudem eine nunmehr im Befestigungsgrund 2 angeordnete Komponente umfasst. Mit der mechanischen Komponente ist, wie auch bei der anderen Ausführungsform, der Anker 3 in die zweite Richtung R2 bewegbar, was in der **Fig. 15** gezeigt ist, in der die Bezugszeichen weggelassen wurden.

Bevorzugt umfasst die mechanische Komponente eine zur Aufnahme des vorderen Endes des Befestigungskörpers 1 geeignete Hülse 21, die von einer ersten Position (Fig. 14) in eine zweite Position (Fig. 15) axial verschiebbar, und mit welcher der Anker 3 in die zweite Richtung R2 bewegbar ist. Die Hülse 21 kann beispielsweise, wie dargestellt, topfförmig ausgebildet sein, und sie kann durchgehende oder unterbrochene (nicht gezeigt) Wände aufweisen. Die Wände sind so bemessen und angeordnet, dass sie bei Betätigen des Antriebs 4 auf den Anker 3 wirken, so dass dieser aus der Ruhe- in die Löseposition gebracht wird. Somit kann das Befestigungsmittel mittels des (nunmehr externen) fluidischen Antriebs 4 aus dem Befestigungsgrund 2 gelöst werden. Der Antrieb 4 selber ist im Befestigungsgrund 2 integriert.

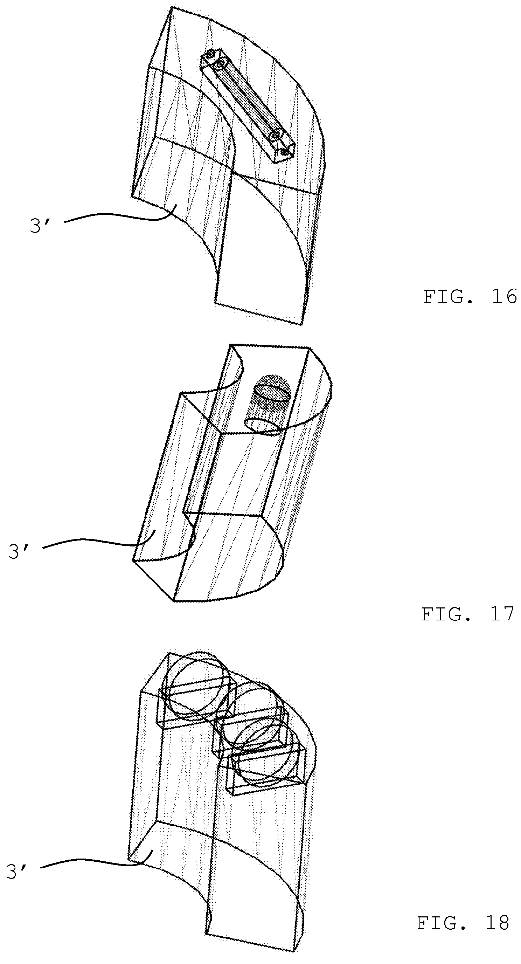

Nach einer weiteren Ausführungsform, welche insbesondere in Hinblick auf Varianten mit nicht-rotierbarem Anker relevant und in **Fig. 16 bis Fig. 18** gezeigt ist, weist der mehrteilige Anker (3, 3') in der bzw. den Kontaktfläche (n) zum Befestigungsgrund (nicht gezeigt) Reibungsverminderer in Form von teilweise aus ihr herausragenden Rollen (**Fig. 16**), Kugeln (**Fig. 17**), und/oder Rädern (**Fig. 18**) auf. In der Fig. 1 befänden sich diese dort aus Übersichtsgründen nicht dargestellten Reibungsverminderer in der im Bild nach oben weisenden Seite der Vorsprünge 5, und die Kontaktfläche würde sich zwischen diesem Bereich und der Hinterschneidung 6 befinden.

Zweck dieser Reibungsverminderer ist die Herabsetzung der Haft- und Gleitreibung zwischen Anker 3 und Befestigungsgrund 2, um den Anker 3 ohne allzu hohen Kraftaufwand in das Gehäuse des Befestigungsmittels einzuziehen. Dies ist deshalb besonders vorteilhaft, weil ansonsten - insbesondere nach längerer Zeit - feststeckende Befestigungsmittel die Folge sein könnten. Dieses Problem ist bei herkömmlichen Schrauben bekannt und wird durch die vorliegenden Reibungsverminderer in Verbindung mit dem Anker 3 wirkungsvoll vermieden. Auch bei Verwendung eines elektrisch unterstützten Antriebs ist die Herabsetzung der Reibung wünschenswert, da derartige Antriebe typischerweise keine hohen Kräfte erzeugen können.

Die Erfindung betrifft schließlich ein Befestigungssystem mit einer Mehrzahl von Befestigungsmitteln gemäß vorhergehenden Definitionen, wobei deren Antriebe fluidisch miteinander, z.B. über zwischengeschaltete Ventile, verbunden und mit einem Über- und/oder Unterdruck beaufschlagbar sind.

Das bedeutet, dass ein derartiges Befestigungssystem den Vorteil eines massiv-parallelen Verbindens bzw. Lösens einer Vielzahl von Befestigungsmitteln erlaubt. Auch das Schalten von Untergruppen, die mittels geeignet zusammengeschalteten Versorgungsleitungen und/oder Ventilen ausgewählt werden können, ist auf einfache und schnelle Weise möglich. Hierzu ist kein Werkzeug nötig; mittels eines kurzen Fluidimpulses können so innerhalb kürzester Zeit beispielsweise ganze Böden von zunächst mit ihnen verschraubten Fliesen befreit, oder Wandpaneele an Wänden befestigt werden.

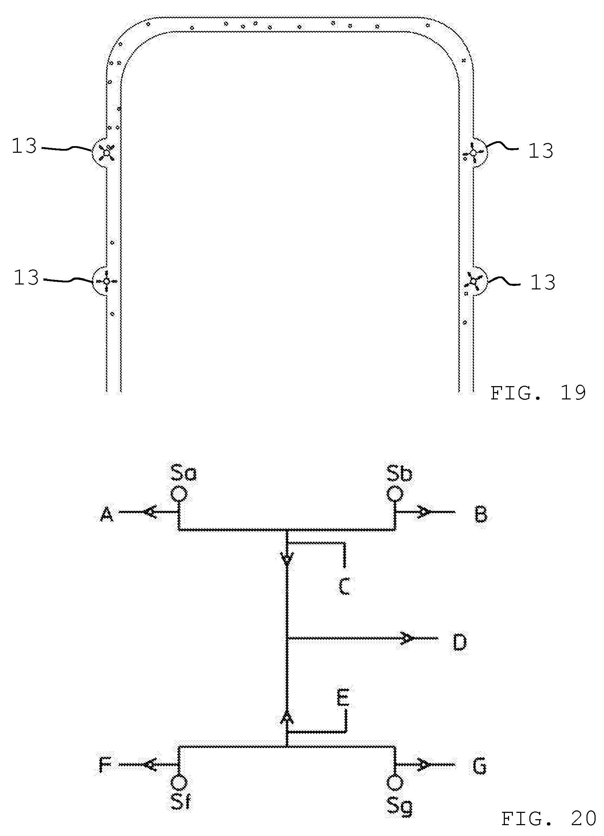

In der **Fig. 19** ist schematisch eine Fluidleitung dargestellt. Diese speist mehrere Gehäuse 13 mit Rotoren (Bezugszeichen weggelassen) mit einem unter Druck stehenden Fluid, das mit Gummikügelchen zur Erhöhung des Impulses angereichert ist. Aufgrund des Durchströmens werden alle Rotoren gleichzeitig angetrieben, so dass die damit in Verbindung stehenden Anker (nicht gezeigt) bewegbar sind. Auf diese Weise ist eine massiv-parallele Betätigung der Befestigungsmittel (nicht gezeigt) möglich.

In der **Fig. 20** ist ein schematisches Schaltbild für ein fluidangetriebenes Befestigungssystem gezeigt. Durch geeignete Anordnung von Ventilen A, B, C, D, E, F und G sind Gruppen bildbar, die ein entsprechend gruppiertes Ansteuern der schematisch dargestellten Befestigungsmittel Sa, Sb, Sf und Sg erlauben. Auf diese Weise kann das unter Über- oder Unterdruck stehende Fluid (nicht gezeigt) an einem einzigen Port (vorliegend D) in das Befestigungssystem eingegeben werden, ohne dass alle Befestigungsmittel gleichzeitig befestigt oder gelöst würden.

Es ist dabei klar, dass die Ventile mittels geeigneter Maßnahmen, beispielsweise elektrisch oder mechanisch, ansteuerbar sein müssen.

Es ist klar, dass sinngemäß auch ein Befestigungssystem mit elektrisch unterstützten Antrieben denkbar ist.

Die vorstehend beschriebene Erfindung löst, wie dargelegt, die aus dem Stand der Technik bekannten Probleme, und stellt fernbetätigbare Befestigungsmittel bereit, welche schnell und ohne Werkzeug befestigt/gelöst werden können, und die zu einem Befestigungssystem kombinierbar sind.

### Bezugszeichenliste

- 1: Befestigungskörper
- 2: Befestigungsgrund
- 3: Anker
- 3': Einzelteil
- 4: Antrieb
- 5: Vorsprung
- 6: Hinterschneidung
- 7: Federn
- 8: Zylinder
- 9: Druckkanal
- 10: Kopf
- 10': Mitnahmeprofil
- 11: Spitze
- 12: Feder
- 13: Gehäuse
- 14: Rotor
- 14': Rotorblätter
- 15: Hohlraum
- 16: Hohlraum
- 17: Zapfen
- 17': Absatz
- 18: Mitnehmer
- 19: Gehäuse
- 20: Gewindebohrung
- 21: Hülse
- L: Längsachse
- R1: erste Richtung
- R2: zweite Richtung
- N: Nenndurchmesser
- A-G: Ventil
- S: schematisch dargestelltes Befestigungsmittel

## Patentansprüche

1. Fernbetätigbares Befestigungsmittel zum lösbaren Verbinden von Bauteilen, mit einer Längsachse (L) und mindestens einem Befestigungskörper (1) zur Einführung in einen Befestigungsgrund (2), wobei der Befestigungskörper (1) einen Anker (3) aufweist, welcher in den Befestigungsgrund (2) einführbar ist, und wobei der Anker (3) zur formschlüssigen und/oder reibschlüssigen Verankerung des Befestigungsmittels im Befestigungsgrund (2) in mindestens eine erste Richtung (R1) bewegbar, und zum Lösen desselben jeweils in eine dieser ersten Richtung (R1) entgegengesetzte zweite Richtung (R2) bewegbar ist, und wobei der Anker (3) mit einem fernbetätigbaren und zum Betrieb mit einem Fluid vorgesehenen Antrieb (4), welcher im Befestigungsmittel angeordnet ist, verbunden und von diesem in zumindest die zweite Richtung (R2) bewegbar ist, und wobei der Anker (3) mindestens zwei Einzelteile (3') umfasst, und sich die jeweils erste Richtung (R1), in die jedes dieser Einzelteile (3') bewegbar ist, radial von der Längsachse (L) weg erstreckt, **dadurch gekennzeichnet, dass** jedes dieser Einzelteile (3') einen senkrecht zur Längsachse (L) verlaufenden Vorsprung (5) aufweist, welcher mit einer Hinterschneidung (6) des Befestigungsgrundes (2) formschlüssig zusammenwirken kann.

2. Befestigungsmittel nach Anspruch 1, wobei der Antrieb (4) sich in einem Bereich zwischen den der Längsachse (L) zugewandten Innenseiten der Einzelteile (3') des Ankers (3) befindet, und gebildet ist durch auf diese Innenseiten wirkende, die Einzelteile (3') radial nach außen drückende Federn (7), die mechanisch mit einem Zylinder (8) gekoppelt sind, der bewegbar in einem längsaxial verlaufenden, von außen mit einem Fluid beaufschlagbaren Druckkanal (9) angeordnet ist, so dass der Zylinder (8) bei einer Druckbeaufschlagung aus einer Ruheposition in eine Löseposition auslenkbar ist, in welcher die mit ihm gekoppelten Federn (7) in die jeweils zweite Richtung (R2) bewegt sind.

3. Befestigungsmittel nach Anspruch 2, wobei dasselbe ferner einen Kopf (10) mit einem für ein Werkzeug zugänglich angeordneten Mitnahmeprofil (10') aufweist, welches mechanisch mit dem Druckkanal (9) oder dem Zylinder (8) gekoppelt ist, so dass bei Rotation und/oder axialer Verschiebung des Mitnahmeprofils Zylinder (8) und Druckkanal (9) relativ zueinander rotiert und/oder axial zueinander verschoben, und die mit dem Zylinder (8) gekoppelten Federn (7) in die jeweils zweite Richtung (R2) bewegt sind.

4. Befestigungsmittel nach einem der Ansprüche 1 bis 3, wobei dasselbe ferner eine am vorderen Ende des Befestigungskörpers (1) angeordnete Spitze (11) mit einer Feder (12) aufweist, deren Federkraft entgegen einer Einschubrichtung des Befestigungsmittels weist.

5. Fernbetätigbares Befestigungsmittel zum lösbaren Verbinden von Bauteilen, mit einer Längsachse (L) und mindestens einem Befestigungskörper (1) zur Einführung in einen Befestigungsgrund (2), wobei der Befestigungskörper (1) einen Anker (3) aufweist, welcher in den Befestigungsgrund (2) einführbar ist, und wobei der Anker (3) zur formschlüssigen und/oder reibschlüssigen Verankerung des Befestigungsmittels im Befestigungsgrund (2) in mindestens eine erste Richtung (R1) bewegbar, und zum Lösen desselben jeweils in eine dieser ersten Richtung (R1) entgegengesetzte zweite Richtung (R2) bewegbar ist, und wobei der Anker (3) mit einem fernbetätigbaren und zum Betrieb mit einem Fluid vorgesehenen Antrieb (4), welcher im Befestigungsmittel angeordnet ist, verbunden und von diesem in zumindest die zweite Richtung (R2) bewegbar ist, **dadurch gekennzeichnet, dass** die erste Richtung (R1) eine Rotation um die Längsachse (L) und der Anker (3) ein Zylinder mit einem Außengewinde ist, welches formschlüssig mit einem Innengewinde im Befestigungsgrund (2) zusammenwirken kann.

6. Befestigungsmittel nach Anspruch 5, wobei der Antrieb (4) in einem Gehäuse (13) angeordnet ist, welches sich jenseits des den Anker (2) umfassenden Endes des Befestigungsmittels befindet, und gebildet ist durch einen Rotor (14), dessen Rotorblätter (14') in einem kreisförmigen, von einem Fluid durchströmbaren Hohlraum (15) angeordnet sind, wobei der Rotor (14) rotatorisch mit dem Anker (3) gekoppelt ist.

7. Befestigungsmittel nach Anspruch 6, wobei der Anker (3) einen Hohlraum (16) aufweist und axial verschiebbar auf einem in diesem Hohlraum (16) aufnehmbaren, mit dem Rotor (14) fest verbundenen Zapfen (17) mit Mitnehmern (18) angeordnet ist.

8. Befestigungsmittel nach Anspruch 5, wobei der Antrieb (4) in einem Gehäuse (19) angeordnet ist, welches sich in einem als ein Widerlager dienenden Bauteil befindet, und durch einen Rotor (14) gebildet ist, dessen Rotorblätter (14') in einem kreisförmigen, von einem Fluid durchströmbaren Hohlraum (15) angeordnet sind, und der eine axiale Gewindebohrung (20) zur Aufnahme des Ankers (3) aufweist, wobei der Anker (3) gegen Rotation gesichert und/oder mit dem Rotor (14) rotatorisch gekoppelt ist.

9. Befestigungsmittel nach einem der Ansprüche 1 bis 4, wobei dessen mehrteiliger Anker (3, 3') in der bzw. den Kontaktfläche(n) zum Befestigungsgrund (2) Reibungsverminderer in Form von teilweise aus ihr herausragenden Rollen, Kugeln, und/oder Rädern aufweist.

10. Befestigungssystem mit einer Mehrzahl von Befestigungsmitteln nach einem der Ansprüche 1 bis 9, wobei deren Antriebe (4) fluidisch miteinander verbunden und mit einem Über- und/oder Unterdruck beaufschlagbar sind.

## Claims

1. Remote operatable fastening device for the detachable connection of components, with a longitudinal axis (L) and at least one fastening body (1) for insertion into a fastening base (2), wherein the fastening body (1) has an anchor (3) which is insertable into the fastening base (2), and wherein, for the form-closing and/or frictional anchoring of the fastening device in the fastening base (2), the anchor (3) is moveable in at least a first direction (R1), and wherein, for the disengaging of the fastening device, the anchor (3) is respectively moveable in a second direction (R2) which is contrary to the first direction (R1), and wherein the anchor (3) is connected with a drive (4) which is remote operatable and which is provided for operation with a fluid and which is arranged within the fastening device, the anchor (3) being moveable by the drive (4) in at least the second direction (R2), and wherein the anchor (3) comprises at least two individual parts (3'), and wherein the respective first direction (R1) into which each of these individual parts (3') is moveable perpendicularly runs away from the longitudinal axis (L), **characterized in that** each of these individual parts (3') has a shoulder (5) which runs perpendicular to the longitudinal axis (L), the shoulder (5) being able to form-closing cooperate with with an undercut (6) of the fastening base (2).

2. Fastening device according to claim 1, wherein the drive (4) is arranged in a region between the anchor's (3) individual parts (3') inner sides which are facing the longitudinal axis (L), and wherein the drive (4) is formed by springs (7) which act onto these inner sides and which press the individual parts (3') radially outwards, the springs (7) being mechanically coupled to a cylinder (8) which is moveably arranged in a pressure channel (9) that runs along the longitudinal axis (L) and that can be loaded with a fluid from the outside, so that the cylinder (8) is displaceable upon pressurization from a resting position into a detaching position in which the springs (7) which are coupled thereto are moved in the respective second direction (R2).

3. Fastening device according to claim 2, wherein further, the same has a head (10) with a catch profile (10') being accessibly arranged for a tool, the catch profile (10') being mechanically coupled to the pressure channel (9) or the cylinder (8), such that upon rotation and/or axial displacement of the catch profile, cylinder (8) and pressure channel (9) are rotated relative one to the other and/or are axially displaced one to the other, and the springs (7) which are coupled to the cylinder (8) are moved into the respective second direction (R2).

4. Fastening device according to any of claims 1 to 3, wherein further, the same has a point (11) which is arranged at the front end of the fastening body (1) and which has a spring (12), the spring force of which being directed contrary to an insertion direction of the fastening device.

5. Remote operatable fastening device for the detachable connection of components, with a longitudinal axis (L) and at least one fastening body (1) for insertion into a fastening base (2), wherein the fastening body (1) has an anchor (3) which is insertable into the fastening base (2), and wherein, for the form-closing and/or frictional anchoring of the fastening device in the fastening base (2), the anchor (3) is moveable in at least a first direction (R1), and wherein, for the disengaging of the fastening device, the anchor (3) is respectively moveable in a second direction (R2) which is contrary to the first direction (R1), and wherein the anchor (3) is connected with a drive (4) which is remote operatable and which is provided for operation with a fluid and which is arranged within the fastening device, the anchor (3) being moveable by the drive (4) in at least the second direction (R2), **characterized in that** the first direction (R1) is a rotation around the longitudinal axis (L) and the anchor (3) is a cylinder with an outer thread which can cooperate form-closing with an inner thread in the fastening base (2).

6. Fastening device according to claim 5, wherein the drive (4) is arranged in a housing (13) which is located beyond that edge of the fastening device which comprises the anchor (3), and wherein the drive is formed by a rotor (14), the rotor blades (14') of which being arranged in a circular cavity that can be flown through by a fluid, wherein the rotor (14) is rotationally coupled to the anchor (3).

7. Fastening device according to claim 6, wherein the anchor (3) has a cavity (16) and is arranged axially moveable on a pin (17) with catches (18), the pin (17) being acceptable in this cavity (16) and firmly attached to the rotor (14).

8. Fastening device according to claim 5, wherein the drive is arranged in a housing (19) which is situated in a component that serves as an abutment, and wherein the drive (4) is formed by a rotor (14), the rotor blades (14') of which being arranged in a circular cavity (15) that can be flown through by a fluid, the rotor (14) having an axial threaded hole (20) for accepting the anchor (3), wherein the anchor (3) is secured against rotation and/or rotationally coupled with the rotor (14).

9. Fastening means according to any of claims 1 to 4, wherein its multi part anchor (3, 3') comprises friction reducers in the form of partially projecting rolls, balls, and/or wheels in its contact surfaces(s) with the fastening base (2).

10. Fastening system with a multitude of fastening means according to any of claims 1 to 9, wherein their drives (4) are fluidically connected to each other and can be loaded with an over and/or under pressure.

## Revendications

1. Dispositif de fixation actionnable à distance pour relier de manière détachable des éléments, comportant un axe longitudinal (L) et au moins un corps de fixation (1) à insérer dans une base de fixation (2), dans lequel le corps de fixation (1) présente une ancre (3) qui peut être insérée dans la base de fixation (2), et dans lequel, pour l'ancrage du dispositif de fixation par complémentarité de forme et/ou par friction dans la base de fixation (2), l'ancre (3) est mobile dans au moins une première direction (R1), et dans lequel, pour le détachement du dispositif de fixation, l'ancre (3) est respectivement mobile dans une seconde direction (R2) qui est contraire à la première direction (R1), et dans lequel l'ancre (3) est reliée à un entraînement (4) qui est actionnable à distance et qui est prévu pour fonctionner avec un fluide et qui est disposé à l'intérieur du dispositif de fixation, l'ancre (3) pouvant être déplacée par l'entraînement (4) dans au moins la seconde direction (R2), et dans lequel l'ancre (3) comprend au moins deux parties individuelles (3'), et dans lequel la première direction respective (R1) dans laquelle chacune de ces parties individuelles (3') est mobile, s'étend perpendiculairement à distance de l'axe longitudinal (L), **caractérisé en ce que** chacune de ces parties individuelles (3') comporte un épaulement (5) qui s'étend perpendiculairement à l'axe longitudinal (L), l'épaulement (5) étant capable de coopérer par complémentarité de forme avec une gorge (6) de la base de fixation (2).

2. Dispositif de fixation selon la revendication 1, dans lequel l'entraînement (4) est disposé dans une région entre les côtés intérieurs des parties individuelles (3') de l'ancre (3) qui font face à l'axe longitudinal (L), et dans lequel l'entraînement (4) est formé par des ressorts (7) qui agissent sur ces côtés intérieurs et qui pressent les parties individuelles (3') radialement vers l'extérieur, les ressorts (7) étant couplés mécaniquement à un cylindre (8) qui est disposé de manière mobile dans un canal de pression (9) qui s'étend le long de l'axe longitudinal (L) et qui peut être chargé avec un fluide de l'extérieur, de sorte que le cylindre (8) peut être déplacé lors de la pressurisation d'une position de repos dans une position de détachement dans laquelle les ressorts (7) qui sont couplés à celui-ci sont déplacés dans la seconde direction respective (R2).

3. Dispositif de fixation selon la revendication 2, dans lequel celui-ci présente en outre une tête (10) avec un profilé d'entraînement (10') disposé de manière accessible pour un outil, le profilé d'entraînement (10') étant couplé mécaniquement au canal de pression (9) ou au cylindre (8), de telle sorte que, lors de la rotation et/ou du déplacement axial du profilé d'entraînement, le cylindre (8) et le canal de pression (9) tournent l'un par rapport à l'autre et/ou sont déplacés axialement l'un par rapport à l'autre, et les ressorts (7) qui sont couplés au cylindre (8) sont déplacés dans la seconde direction respective (R2).

4. Dispositif de fixation selon une quelconque des revendications 1 à 3, dans lequel celui-ci présente en outre une pointe (11) qui est disposée à l'extrémité avant du corps de fixation (1) et qui présente un ressort (12), dont la force élastique est dirigée contrairement à une direction d'insertion du dispositif de fixation.

5. Dispositif de fixation actionnable à distance pour relier de manière détachable des éléments, comportant un axe longitudinal (L) et au moins un corps de fixation (1) à insérer dans une base de fixation (2), dans lequel le corps de fixation (1) présente une ancre (3) qui peut être insérée dans la base de fixation (2), et dans lequel, pour l'ancrage du dispositif de fixation par complémentarité de forme et/ou par friction dans la base de fixation (2), l'ancre (3) est mobile dans au moins une première direction (R1), et dans lequel, pour le détachement de celui-ci, l'ancre (3) est respectivement mobile dans une seconde direction (R2) qui est contraire à la première direction (R1), et dans lequel l'ancre (3) est reliée à un entraînement (4) qui est actionnable à distance et qui est prévu pour fonctionner avec un fluide et qui est disposé à l'intérieur du dispositif de fixation, l'ancre (3) pouvant être déplacée par l'entraînement (4) dans au moins la seconde direction (R2), **caractérisé en ce que** la première direction (R1) est une rotation autour de l'axe longitudinal (L) et l'ancre (3) est un cylindre comportant un filet extérieur qui peut coopérer par complémentarité de forme avec un taraudage dans la base de fixation (2).

6. Dispositif de fixation selon la revendication 5, dans lequel l'entraînement (4) est disposé dans un boîtier (13) qui est situé au-delà de l'extrémité du dispositif de fixation qui comprend l'ancre (3), et dans lequel l'entraînement est formé par un rotor (14) dont les pales (14') sont disposées dans une cavité circulaire (15) qui peut être traversée par un fluide, dans lequel le rotor (14) est couplé en rotation à l'ancre (3).

7. Dispositif de fixation selon la revendication 6, dans lequel l'ancre (3) présente une cavité (16) et est disposée pour être déplacée axialement sur une goupille (17) avec le profilé d'entraînement (18), la goupille (17) pouvant être reçue dans cette cavité (16) et étant solidaire du rotor (14).

8. Dispositif de fixation selon la revendication 5, dans lequel l'entraînement est disposé dans un boîtier (19) qui est situé dans un élément qui sert de butée, et dans lequel l'entraînement (4) est formé par un rotor (14) dont les pales (14') sont disposées dans une cavité circulaire (15) qui peut être traversée par un fluide, le rotor (14) présentant un trou fileté axial (20) pour recevoir l'ancre (3), dans lequel l'ancre (3) est sécurisée contre la rotation et/ou couplée en rotation avec le rotor (14).

9. Dispositif de fixation selon une quelconque des revendications 1 à 4, dans lequel son ancre (3, 3') en plusieurs parties présente des limiteurs de friction sous forme de rouleaux, de billes et/ou de roues se projetant partiellement dans la (les) surfaces(s) de contact avec la base de fixation (2).

10. Système de fixation avec une multitude de dispositifs de fixation selon une quelconque des revendications 1 à 9, dans lequel leurs entraînements (4) sont reliés de manière fluidique les uns aux autres et peuvent être soumises à une surpression et/ou à une dépression.
